# EUROPEAN PATENT SPECIFICATION

(11) **EP 2 325 983 B1**
(45) Date of publication and mention of the grant of the patent: **10.05.2017**
(21) Application number: 08810461.7
(22) Date of filing: 11.09.2008
(51) Int. Cl.: H02K 9/22, B66B 11/08, H02K 21/14, H02K 7/10, B66B 11/04

(54) **HOIST FOR ELEVATOR**
HEBEZEUG FÜR AUFZUG
TREUIL POUR ASCENSEUR

(43) Date of publication of application: 25.05.2011
(73) Proprietor: Mitsubishi Electric Corporation, Tokyo 100-8310 (JP)
(72) Inventor: KIMURA, Yasuki, Tokyo 100-8310 (JP); TOYA, Mitsutoshi, Tokyo 100-8310 (JP); URAKAWA, Hidehiko, Tokyo 100-8310 (JP); TADA, Junichi, Tokyo 100-8310 (JP)
(74) Representative: Hoffmann Eitle
(86) International application number: PCT/JP2008/066409
(87) International publication number: WO 2010/029623

(56) References cited:
- JP-A- 53 015 502
- JP-A- 2008 115 993
- JP-U- 57 101 580
- JP-U- 60 038 060
- JP-U- 62 014 964

## Description

### TECHNICAL FIELD

The invention relates to a cooling structure of an elevator hoist having a braking device mounted therein.

### BACKGROUND ART

A related hoist has a stator provided in a housing, which is a closed-type rigid frame; a rotor, which is a rotating body having a field magnet facing a stator and a driving sheave at one side thereof, and which is provided in the housing; a braking device that is arranged on an inner face side of the rotor. The hoist has a stationary-side heat pipe, which penetrate a side face opposite to the stator in the housing, and a rotary-side heat pipe, which penetrate a side face opposite to the housing side in the rotor. The heat in the housing is radiated to the outside by the stationary-side heat pipe, and the heat in the rotor is radiated to the outside by the rotary-side heat pipe (see Patent Document 1, which is related to the preamble of claim 1).

In addition, a related permanent magnet rotating-type motor has a stator attached to a rigid frame and a rotor having a field magnet facing the stator. Cooling fins are provided on an inner circumferential surface of the rotor or heat pipes are provided in a peripheral direction of the rotor. The cooling fins are rotated by rotation of the rotor, so that cooling air is stirred to radiate the heat generated from the stator. In addition, the heat is also radiated by the heat pipes of the rotor (refer to Patent Document 2).

Additionally, another related permanent magnet rotating-type motor has a stator provided in a rigid frame; a spindle supported rotatably to the rigid frame; and a rotor, which is provided to the spindle and has a field magnet facing the stator. In addition, heat pipes are provided in the spindle, one ends of the heat pipes are projected to the outside of the motor and cooling fins are provided on the projecting portions. An electric blower is provided oppositely to the cooling fins. By the electric blower, the rigid frame and the cooling fins of the heat pipes are cooled down. Accordingly, the rotating-type motor is cooled down (see Patent Document 3).

Patent Document 1: JP-A No. 2002-101615 (pages 2, 3, and FIG. 2)
Patent Document 2: JP-A No. 8-298736 (page 3 and FIGS. land 2)
Patent Document 3: JP-A No. 2001-8411

### SUMMARY OF THE INVENTION

### PROBLEMS TO BE SOLVED

As described above, according to Patent Document 1, the heat pipes are provided to both the stationary-side and the rotary-side, so that the number of parts is increased. In addition, the cooling is made by the natural air-cooling, so that there is a problem that a cooling ability is lower than a forced cooling method using the blowing and the like.

In addition, according to Patent Document 2, the heat generated from the stator is radiated through the cooling fins or heat pipes provided on the rotor. However, the rigid frame having the stator is not cooled down itself, so that there is a problem that a cooling ability is lower.

Additionally, according to Patent Document 3, the cooling fins of the heat pipes are forcibly cooled down by the electric blower. However, the electric blower has to be provided, so that there is a problem that the number of components is increased.

The invention has been made to solve the above problems. An object of the invention is to cool down effectively the heat generated from a hoist with a simple component.

### MEANS FOR SOLVING THE PROBLEMS

In a elevator hoist according to the invention, a motor is configured by: a rotating body that is rotatably supported by a bearing on a spindle provided vertically at a central position of a rigid frame; a stator provided on the rigid frame; and a field magnet, which is provided on the rotating body, and which faces the stator. A heat pipe is provided inside the spindle, a portion of the heat pipe is projecting to the outside of the spindle, and heat radiation fins are provided on the projecting portion. Cooling fins are provided on the rotating body and arranged around the heat radiation fins.

### EFFECTS OF THE INVENTION

According to the invention, the heat generated from the hoist is guided to the heat radiation fins through the heat pipe, cooling air is generated by rotation of the cooling fins by the rotation of the rotating body, and the cooling air radiates the heat of the heat radiation fins, so that the hoist is cooled down. Thus, it is not necessary to provide separately a blower for cooling the generated heat, so that it is possible to cool down effectively the heat generated from the hoist with a little component.

### BRIEF DESCRIPTION OF THE DRAWINGS

[FIG. 1] A view showing a front view of a hoist according to an illustrative embodiment 1 of the invention.
[FIG. 2] A view showing a sectional view in a section A-A of FIG. 1,
[FIG. 3] A view showing a front view of a hoist according to an illustrative embodiment 2 of the invention.
[FIG. 4] A view showing a sectional view in a section B-B of FIG. 2.
[FIG. 5] A view showing an enlarged view of a portion of cooling fins 20, the view illustrating an aspect of generating cooling air.
[FIG. 6] A view showing an enlarged view of a portion of cooling fins 20, the view illustrating an aspect of generating cooling air.
[FIG. 7] A view showing a front view of a hoist according to an illustrative embodiment 3 of the invention.
[FIG. 8] A view showing a longitudinal sectional view of a side face of a hoist according to an illustrative embodiment 4 of the invention.
[FIG. 9] A view showing a sectional view in a section C-C of FIG. 8.

### DETAILED DESCRIPTION OF ILLUSTRATIVE EMBODIMENTS

Hereinafter, preferred illustrative embodiments of the invention will be described with reference to the drawings.

### Illustrative Embodiment 1

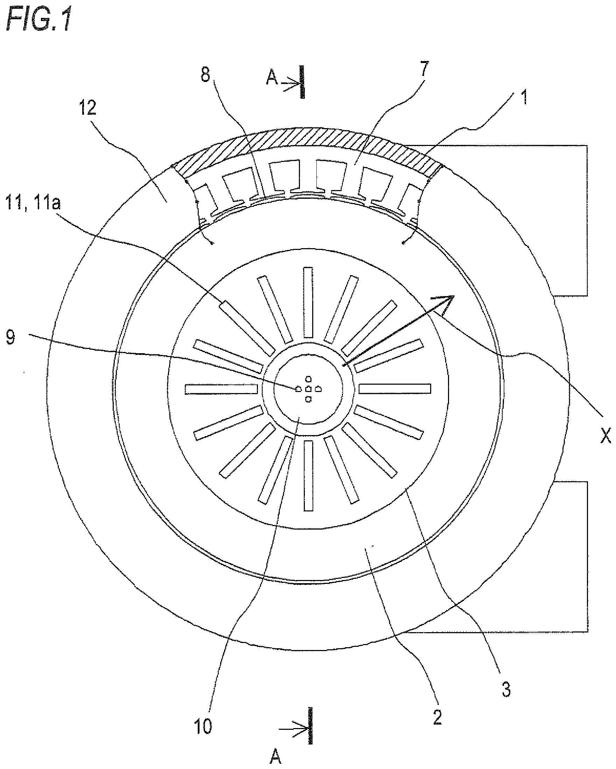

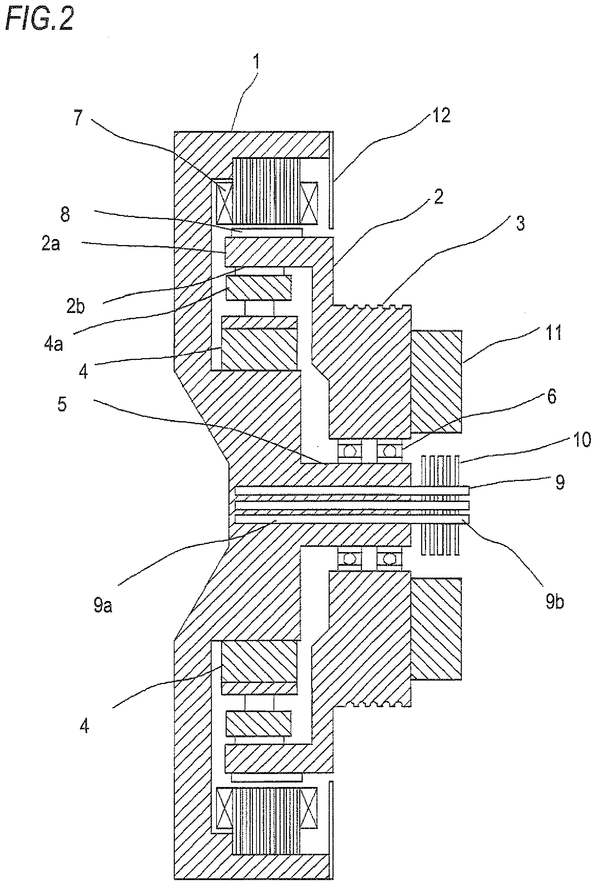

FIG. 1 is a front view of a hoist according to an illustrative embodiment 1 of the invention. FIG. 2 is a sectional view in a section A-A of FIG. 1.

In the drawings, a hoist has a rigid frame 1, a rotating body 2, a driving sheave 3 and a braking device 4 that brakes rotation of the rotating body 2. The rigid frame 1 has a bowl shape having an opening in one side, and a spindle 5 provided vertically at a central position. The rotating body 2 has a bowl shape having an opening in one side, and an opening section 2a is arranged at an inner side of the rigid frame 1 and face with a bottom surface of the rigid frame 1. The rotating body 2 is rotatably supported by a bearing 6 on the spindle 5. In addition, a stator 7 is attached on an inner circumferential surface of the rigid frame 1. A field magnet 8 faces the stator 7 and is attached on an outer circumference of the rotating body 2. The stator 7 and the field magnet 8 configure a motor. The braking device 4 is arranged at an inner circumferential side of the rotating body 2 and is attached to the rigid frame 1. The braking device 4 performs a braking operation and a braking release operation by moving a braking piece 4a to and from a braking surface 2b by an electromagnet and a push spring, which are not shown. In the meantime, two braking devices 4 are arranged at both sides about a center of rotation of the rotating body 2.

A plurality of heat pipes 9 is inserted in the spindle 5, and portions of the heat pipes are projected to the outside of the spindle 5. Portions of the heat pipes 9 inserted in the spindle 5 are heat receiving portions 9a, and portions of the heat pipes projecting to the outside of the spindle 5 are heat radiation portions 9b. A plurality of disc-shaped heat radiation fins is arranged axially and attached to the heat radiation portions 9b. The driving sheave 3 is integrated on one side of the rotating body 2 opposite to the rigid frame 1. Cooling fins 11, which are provided at a side face of the driving sheave 3, are arranged around the heat radiation fins 10. The cooling fins 11 are configured as a plurality of flat plates 11a. The flat plates 11a have intervals in a rotational direction and radially arranged in a diametrical direction from a center of rotation. In addition, a protection cover 12 is attached to an edge portion of an opening of the rigid frame 1. The protection cover 12 has a plate shape, a side face thereof covering the stator 7 and an inner circumferential face thereof having a gap with the rotating body 2.

Next, operations of the hoist will be described. First, a driving operation of the hoist will be described. As the stator 7 is applied with current and the field magnet 8 is magnetized, the rotating body 2 is rotated. At this time, the electromagnet of the braking device 4 is applied with current to generate electromagnetic force against press force of the push spring, and the braking piece 4a is released from the braking surface 2b, so that the braking is released. When the hoist is stopped, the current flowing in the stator 7 is shut off and the driving of the motor is stopped. At this time, the current flowing in the electromagnet of the braking device 4 is also shut off to release the electromagnetic force, so that the braking piece 4a presses the braking surface 2b by the push spring to brake the rotation of the rotating body 2. Accordingly, when the hoist is driven, the stator 7 and the electromagnet of the braking device 5 are applied with current, so that heat due to the current is generated. Further, when the rotating body 2 is rotated, heat due to the rotation is generated from the bearing 6.

Next, an aspect, in which the heat generated by the drive of the hoist is cooled down, will be described. The heat generated from the stator 7 and the braking device 4 is respectively heat-conducted from the attachment surfaces of the rigid frame 1 and spread to the spindle 5. In addition, the heat generated from the bearing 6 is also heat-conducted to the spindle 5 of the rigid frame 1. The heat conducted to the spindle 5 in this way is conducted to the heat radiation portions 9b from the heat receiving portions 9a and then heat-conducted to the heat radiation fins 10. Then, the cooling fins 11 are rotated with rotating the rotating body 2, so that cooling air is generated. By the cooling air, the heat of the heat radiation fins 10 is radiated to the outside of the hoist.

The cooling air caused by the rotation of the cooling fins 11 is generated as follows. As the cooling fins 11 are rotated, the air in the spaces between the flat plates 11a adjacent to the rotation direction is also going to rotate. The air is going to flow in a diametrical direction because centrifugal force due to the rotation is applied to the air. Accordingly, the air in the spaces between the flat plates 11a adjacent to the cooling fins 10 is pushed out, so that the cooling air is generated as air current flowing in the diametrical direction from the heat radiation fins 10, as indicated with an arrow X in FIG. 1. Then, the heat of the heat radiation fins 10 is radiated to the outside of the hoist, accompanied with the air current of the cooling air. In addition, the cooling fins 10 are also cooled down while being rotated.

The hoist of the illustrative embodiment 1 configured as described above has the following effects.

In the hoist of the illustrative embodiment 1, the rotating body 2 is rotatably supported by the bearing 6 on the spindle 5 provided vertically at the central position of the rigid frame 1 and the motor is configured by the stator 7 provided in the rigid frame 1 and the field magnet 8 that is provided on the rotating body 2 and arranged oppositely to the stator 7. The heat pipes 9 are provided in the spindle 5 and a portion of the heat pipes are projecting to the outside of the spindle 5, and the heat radiation fins 10 are provided on the projecting portions. The cooling fins 11 are provided on the rotating body 2 and arranged around the heat radiation fins 10. Accordingly, the heat generated from the hoist is conducted to the heat radiation fins 10 through the heat pipes 9, and the cooling air generated by rotation of the cooling fins 11 radiates the heat of the heat radiation fins 10, so that the hoist is cooled down. As a result, it is not necessary to provide separately a blower for cooling the generated heat, and it is possible to cool down effectively the heat generated from the hoist with a little component.

In addition, since the cooling fins 11 are also cooled down itself by the rotation, the heat conducted to the rotating body 2 is also radiated, so that the hoist is cooled down more effectively.

Further, since the cooling fins 11 are configured as the plurality of flat plates 11a that are provided at an interval in the rotational direction and radially arranged in the diametrical direction from the center of rotation, it is possible to cool down the heat generated from the hoist with very little components.

### Illustrative Embodiment 2

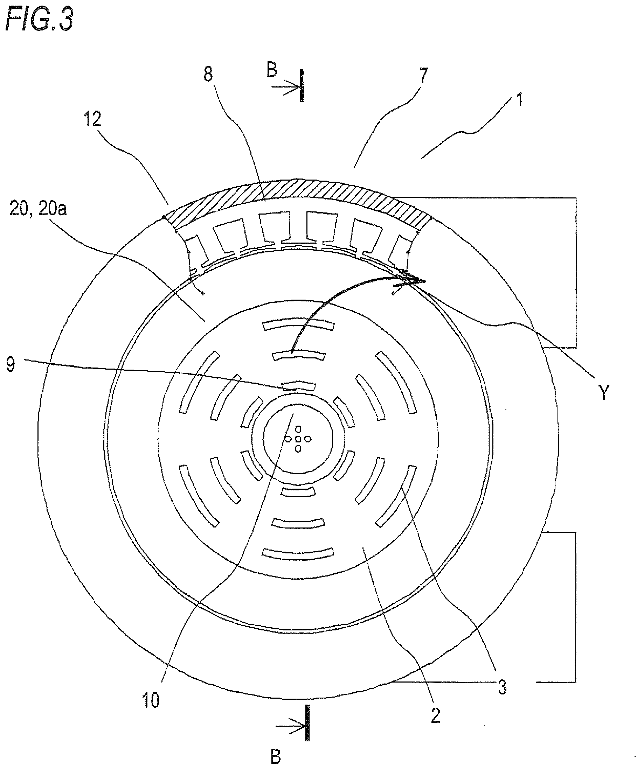

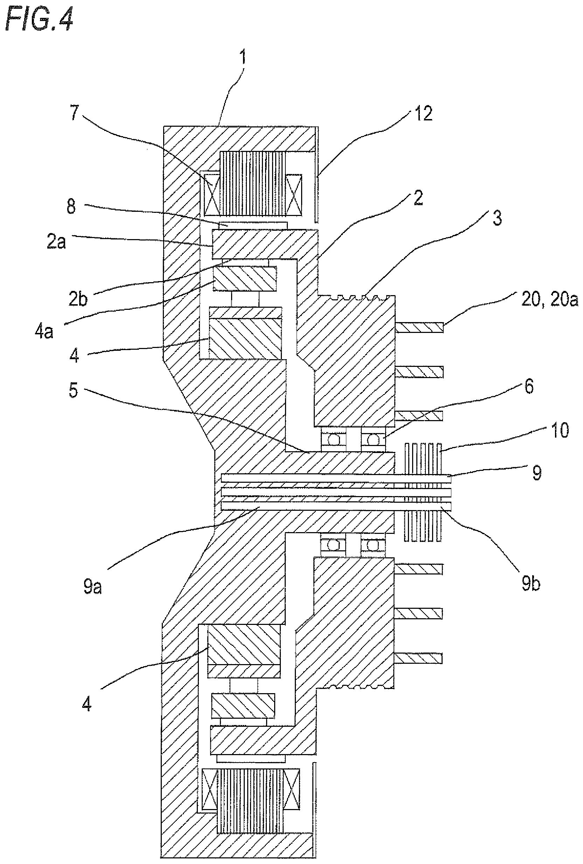

FIG. 3 is a front view of a hoist according to an illustrative embodiment 2 of the invention. FIG. 4 is a sectional view in a section B-B of FIG. 2

In the hoist of the illustrative embodiment 2, the cooling fins provided on the rotating body 2 in the illustrative embodiment 1 are modified.

Cooling fins 20 provided at the side face of the driving sheave 3 are arranged around the heat radiation fins 10. The cooling fins 20 are configured as a plurality of arc-shaped plates 20a. The arc-shaped plates 20a are concentric with the rotating body 2, and the arc-shaped plates 20a are arranged at an interval in rotational and diametrical directions. The arc-shaped plates 20a have arcs corresponding to a same central angle located at the center of rotation of the rotating body 2. In addition, the arc-shaped plates 20a adjacent to each other in the rotational direction are concentrically arranged. The others are the same as the illustrative embodiment 1 and the detailed descriptions thereof will be omitted. Further, the same reference numerals as the illustrative embodiment 1 indicate the corresponding components.

Next, an aspect in which the hoist of the illustrative embodiment 2 is cooled down will be described.

The heat generated in the hoist is conducted to the heat radiation portions 9b from the heat receiving portions 9a and heat-conducted to the heat radiation fins 10, in the similar way to the illustrative embodiment 1. Then, the cooling fins 20 are rotated with the rotation of the rotating body 2, so that cooling air is generated. By the cooling air, the heat of the heat radiation fins 10 is radiated to the outside of the hoist.

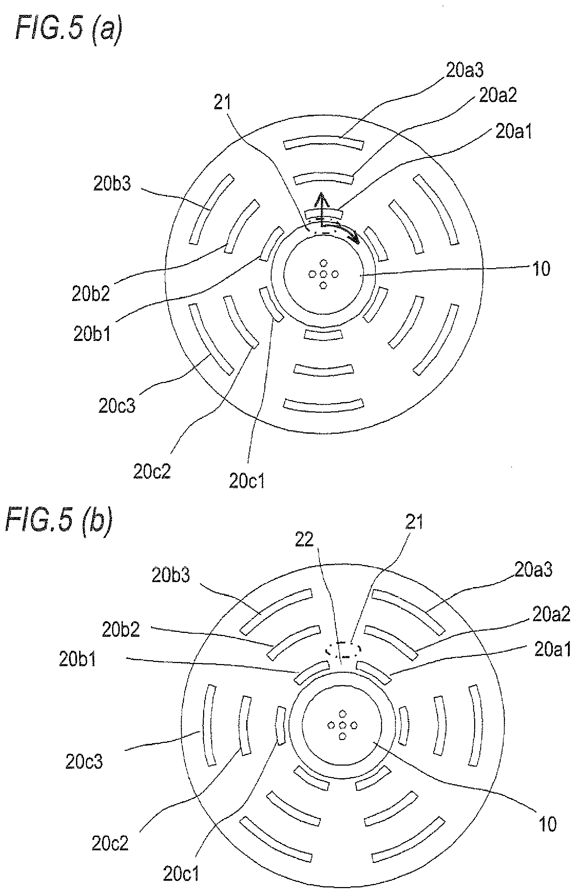

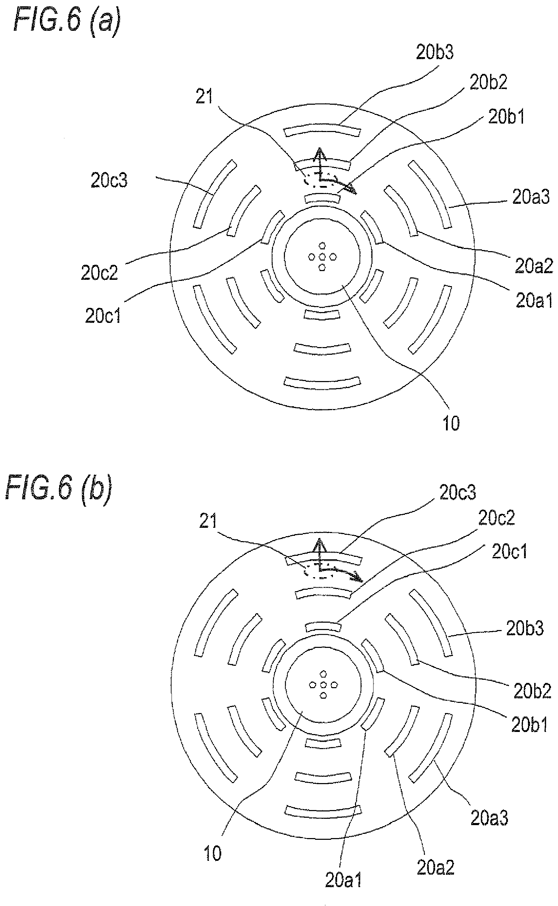

Next, an aspect, in which the cooling air is generated by the cooling fins 20 are rotated, will be described with reference to FIGS. 5 and 6.

FIGS. 5 and 6 are enlarged views of a portion of cooling fins 20, the view illustrating an aspect of generating cooling air. In FIGS. 5 and 6, fins 20a1, 20a2, 20a3, which are adjacent to each other in a diametrical direction and fins 20b1, 20b2, 20b3, 20c1, 20c2, 20c3, which are adjacent to the fins in the rotational direction, are arranged from positions in nearer to the center of rotation. As the cooling fins 20 are rotated, the air in the spaces between the cooling fins adjacent to each other in the diametrical direction is also going to rotate. In particular, the air adjacent to the cooling fins is going to rotate. For example, the air 21 adjacent to the fin 20a1 in the diametrical space between the fin 20a1 and the heat radiation fin 10 is going to rotate as the fin 20a1 rotates. At this time, the air 21 is rotated to apply centrifugal force and flows in the diametrical direction by the rotation, as indicated with arrows in FIG. 5(a).

In addition, the air 21 is going to stay without rotating together with the fin 20a1 because the air has a space not interrupted in the rotational direction. Then, when the fin 20a1 rotates and the diametrical space of the air 21 reaches a gap 22 in the rotational direction between the fin 20a1 and the fin 20b1, the air 21 is going to flow in the diametrical direction due to the centrifugal force, as shown in FIG. 5(b). Then, as the cooling fins 20 are further rotated, the air 21 enters into a space of the adjacent cooling fins in the one outer stage in the diametrical direction, i.e., a diametrical space between the fin 20b1 and the fin 20b2, as shown in FIG. 6(a).

Since the cooling fins 20 continue to rotate, the air 21 is going to flow into a diametrical space of the cooling fin 20 in the further one outer stage, i.e.. a diametrical space between the fin 20c2 and the fin 20c3, and finally flows out to the outside of the hoist. The other airs in the spaces of the adjacent cooling fins in the diametrical direction also flow in the diametrical direction and flow out to the outside of the hoist. Accordingly, the cooling air is generated as the air current flowing in the diametrical and rotational directions from the heat radiation fins 10, as indicated with an arrow Y in FIG. 3. Then, the heat of the heat radiation fins 20 is radiated accompanied with the air current of the cooling air to the outside of the hoist. In addition, the cooling fins 20 are also cooled down itself by the rotation.

The hoist of the illustrative embodiment 2 configured as described above has the following effects, in addition to the same effects as the illustrative embodiment 1.

Since the cooling fins 20 have the concentric shapes with the rotating body 2, the air resistance is small when the cooling fins are rotated. Accordingly, the rotation loss of the motor is also decreased, and the heat generation is suppressed, so that the cooling ability is further improved.

In the meantime, although the cooling fins 20 had the arc-shapes, the cooling fins may be tabular plates on an approximate tangent line of a concentric circle of the rotating body 2. Also in this shape, although the air resistance is greater than that of the arc-shape, the rotation loss is smaller than the illustrative embodiment 1.

In addition, although the cooling fins 20 had the arc-shapes corresponding to a same central angle located at the center of rotation of the rotating body 2, the cooling fins may not have lengths of circular-arcs corresponding to the same central angle. The arc-shaped plates have only to be arranged at an interval in the diametrical and rotational directions. When the cooling fins are the arc-shapes corresponding to the same central angle, the airs in the spaces of the cooling fins adjacent to each other in the diametrical direction reach the gaps of the fins adjacent to each other in the rotational direction at the same timing and thus flow out to the outside at the same timing. Accordingly, it is possible to radiate the heat with suppressing the turbulent flow of the cooling air. Further , since it is possible to enlarge heat radiation areas of the cooling fins, it is preferable that the cooling fins 20 have arc-shapes corresponding to the same central angle.

### Illustrative Embodiment 3

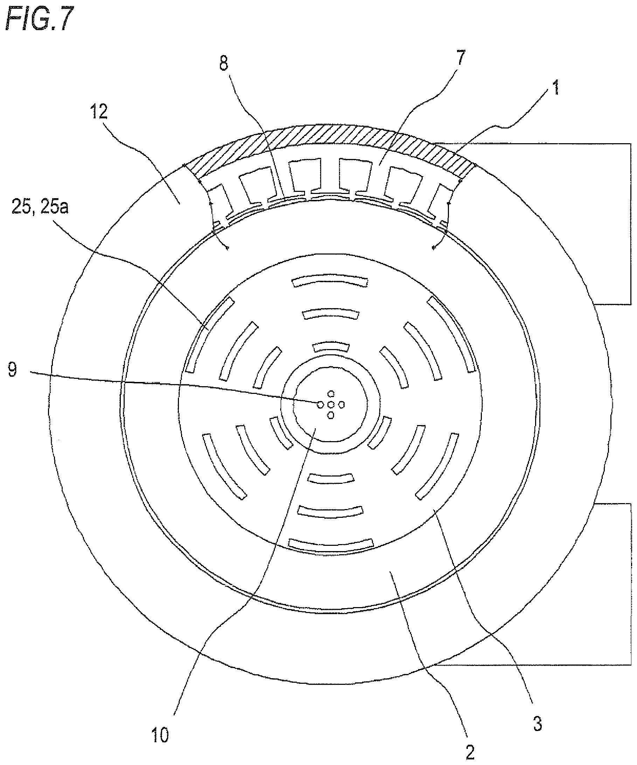

FIG. 7 is a front view of a hoist according to an illustrative embodiment 3 of the invention.

In the hoist of the illustrative embodiment 3, the cooling fins provided on the rotating body 2 in the illustrative embodiment 2 are modified.

Cooling fins 25, which are provided at the side of the driving sheave 3, are arranged around the heat radiation fins 10. The cooling fins 25 are configured as a plurality of arc-shaped plates 25a. The arc-shaped plates 20a are concentric arc-shapes with the rotating body 2 and are arranged at an interval in rotational and diametrical directions. The arc-shaped plates 20a have arc-shapes corresponding to a same central angle located at the center of rotation of the rotating body 2. In addition, the arc-shaped plates 25a adjacent to each other in the rotational direction are arranged on circles having different radii with the center of rotation as center. The other components are the same as the illustrative embodiment 2, and the detailed descriptions thereof will be omitted. Further, the same reference numerals as the illustrative embodiment 2 indicate the corresponding components.

Also in the illustrative embodiment 3, the arc-shaped plates 25a of the cooling fins 25 forms circular shapes that are concentric with the rotating body 2 and are arranged at an interval in the rotational and diametrical directions. Accordingly, in the same way to the illustrative embodiment 2, as the rotating body 2 is rotated with the rotation of the cooling fins 25, the cooling air is generated. By the cooling air, the heat of the heat radiation fins 10 is radiated, so that the heat generated from the hoist is cooled down.

Also in the illustrative embodiment 3, in the same way to the illustrative embodiment 2, since the cooling fins 25 are the arc-shaped plates concentric with the rotating body 2, the air resistance is small when the cooling fins are rotated.

### Illustrative Embodiment 4

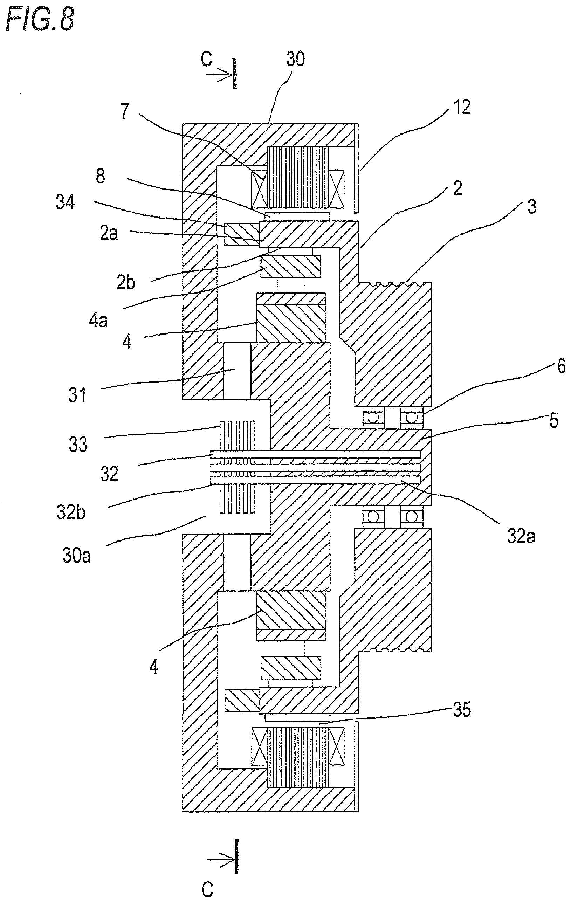

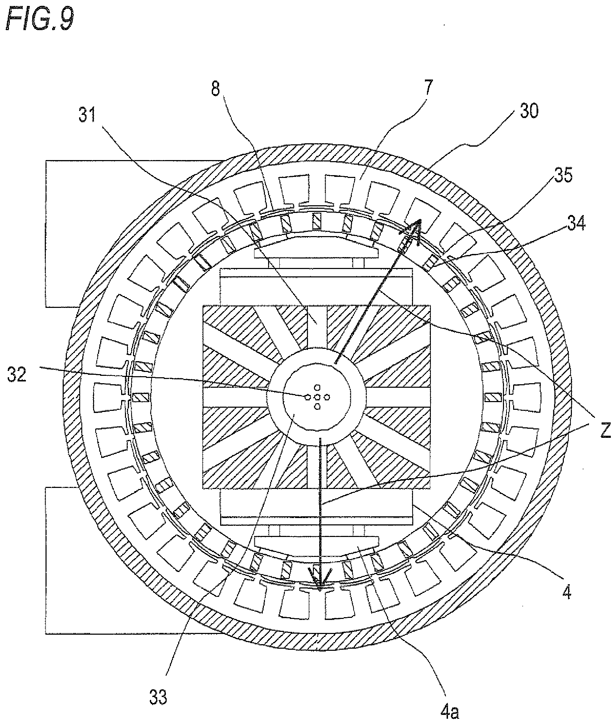

FIG. 8 is a longitudinally sectional view of a side face of a hoist according to an illustrative embodiment 4 of the invention. FIG. 9 is a sectional view in a section C-C of FIG. 8.

In the hoist of the illustrative embodiment 4, the cooling aspect is different from that of the illustrative embodiment 1.

A rigid frame 30, which has a bowl shape having an opening in one side, forms a space portion 30a that is recessed cylindrically and inwardly at its central position, and the spindle 5 provided vertically at the central position at a side opposite to the space portion 30a. In addition, a plurality of ventilation holes 31 formed in the rigid frame 30. The ventilation holes 31 are radially penetrated from the space portion 30a to an inside of the rigid frame in a diametrical direction.

A plurality of heat pipes 32 is inserted in the spindle 5 and a part of the heat pipes 32 projects to the space portion 30a at the outside of the spindle 5. Portions of the heat pipes 32 inserted in the spindle 5 are heat receiving portions 32a, and portions of the heat pipes projecting to the space portion 30a are heat radiation portions 32b. A plurality of disc-shaped heat radiation fins 33 is axially arranged and attached to the heat radiation portions 32b. In the meantime, the ventilation holes 31 are arranged around the heat radiation fins 33.

Cooling fins 34 is provided at an opening section 2a of the rotating body 2. The cooling fins 34 are arranged on extensions of the ventilation holes 31 in the diametrical direction. In addition, the cooling fins 34 are configured as a plurality of flat plates, are arranged at an interval in the rotational direction, and are radially arranged in the diametrical direction from the center of rotation.

Next, an aspect, in which the hoist of the illustrative embodiment 4 is cooled down, will be described. In the same way to the illustrative embodiment 1, the heat generated from the hoist is conducted to the heat radiation portions 32b from the heat receiving portions 32a of the heat pipes 32 and is heat-conducted to the heat radiation fins 33. Then, the rotating body 2 is rotated with the cooling fins 34, so that cooling air is generated. By the cooling air, the heat of the heat radiation fins 33 is radiated. Due to the centrifugal force on the air in the spaces of the adjacent cooling fins in the rotational direction, the cooling air flows in the diametrical direction, in the same way to the illustrative embodiment 1. Accordingly, the cooling air is generated by the air current flowing in the diametrical direction from the heat radiation fins 33 through the ventilation holes 31, as indicated with an arrow Z. The air current meets to the inner circumferential surface of the rigid frame 30 and flows out to the outside through a gap 35 between the stator 7 and the field magnet 8. Then, the heat of the heat radiation fins 33 is introduced into the rigid frame 30 through the ventilation holes 31 accompanied with the air current of the cooling air. The heat of the heat radiation fins 33 is radiated to the outside of the hoist through the gap 34 between the stator 7 and the field magnet 8. Not only the heat radiated from the heat radiation fins 33 also the heat radiated to the inside from the braking device 4 or rigid frame 30 and the heat radiated to the inside from the stator 7 are radiated to the outside of the hoist, accompanied with the cooling air.

As described above, the illustrative embodiment 4 of the invention has the same effects as the illustrative embodiment 1. In addition, the central position of the rigid frame 30 is formed as the space portion 30a that is recessed cylindrically and inwardly, the ventilation holes 31, which are penetrated radially and inwardly from the space portion 30a in the diametrical direction, are provided. The cooling fins 34 are arranged on extensions of the ventilation holes 31 in the diametrical direction. Accordingly, the heat radiated into the hoist is also radiated to the outside of the hoist, so that it is possible to cool down the hoist more effectively.

### INDUSTRIAL APPLICABILITY

As described above, the elevator hoist of the invention is suitable for a driving apparatus that elevates a cage of an elevator and stops the cage at a desired floor.

## Claims

1. An elevator hoist comprising:
a rigid frame (1);
a spindle (5) that is provided vertically at a central position of the rigid frame (1);
a rotating body (2) that is rotatably supported by a bearing (6) on the spindle (5);
a stator (7) provided on the rigid frame (1); and
a field magnet (8), which is provided on the rotating body (2), which faces the stator (7), and which is configured as a motor together with the stator (7);
**characterized by** further comprising:
a heat pipe (9) that is provided in the spindle (5), wherein a portion of heat pipe (9) is projecting to the outside of the spindle (5);
a heat radiation fin (10) that is provided on the projecting portion of the heat pipe (9); and
a cooling fin (11), which is provided on the rotating body (2), and which is arranged around the heat radiation fin (10).

2. The elevator hoist according to claim 1,
wherein the cooling fin (11) is configured as a plurality of flat plates (11a), and
wherein the flat plates (11a), which are arranged at an interval in a rotational direction, are radially arranged in a diametrical direction from a center of rotation of the rotating body (2).

3. The elevator hoist according to claim 1,
wherein the cooling fin (11) is configured as a plurality of arc-shaped or tabular plates (20a), and
wherein the plates, which are arranged at an interval in rotational and diametrical directions, have arc-shapes approximately concentric with the rotating body (2) or have tabular-shapes on an approximate tangent line of a concentric circle of the rotating body (2).

4. The elevator hoist according to claim 3,
wherein the plates of the cooling fin (11) has arc-shaped plates each corresponding to a same central angle located at a center of rotation of the rotating body (2).

5. The elevator hoist according to claim 1,
wherein the rigid frame (1) forms a space portion that is recessed cylindrically and inwardly at its central position
wherein the heat pipe (9) projects into the space portion,
wherein the heat radiation fin (10) is provided on the projecting portion,
wherein a ventilation hole (31) is formed in the rigid frame (1), is radially penetrated from the space portion to an inside of the rigid frame (1) in a diametrical direction, and is arranged around the heat radiation fin (10); and
wherein the cooling fin (11) is provided on the rotating body (2) and arranged on extensions of ventilation holes in the diametrical direction.

## Patentansprüche

1. Fahrstuhlhebevorrichtung, umfassend:
einen starren Rahmen (1);
eine Spindel (5), die vertikal an einer zentralen Position des starren Rahmens (1) vorgesehen ist;
einen Drehkörper (2), der durch ein Lager (6) drehbar an der Spindel (5) gelagert ist;
einen am starren Rahmen (1) vorgesehenen Stator (7); und
einen Feldmagneten (8), der an dem Drehkörper (2) dem Stator (7) zugewandt vorgesehenen ist, und der zusammen mit dem Stator (7) als ein Motor ausgebildet ist;
**gekennzeichnet dadurch, dass** die Vorrichtung ferner umfasst:
ein Wärmerohr (9), das in der Spindel (5) vorgesehen ist, wobei ein Abschnitt des Wärmerohres (9) zur Außenseite der Spindel (5) vorsteht;
eine Wärmeabstrahlungsrippe (10), die an dem vorstehenden Abschnitt des Wärmerohres (9) vorgesehen ist; und
eine am Drehkörper (2) vorgesehene Kühlrippe (11), die um die Wärmeabstrahlungsrippe (10) herum angeordnet ist.

2. Fahrstuhlhebevorrichtung nach Anspruch 1,
bei der die Kühlrippe (11) als eine Vielzahl von flachen Platten (11a) ausgebildet ist, und
wobei die flachen Platten (11a), die mit einem Intervall in einer Drehrichtung angeordnet sind, radial in einer diametralen Richtung von einem Drehpunkt des Drehkörpers (2) angeordnet sind.

3. Fahrstuhlhebevorrichtung nach Anspruch 1,
bei der die Kühlrippe (11) als eine Vielzahl von bogenförmigen oder tafelförmigen Platten (20a) ausgebildet ist, und
wobei die Platten, die mit einem Intervall in Dreh- und diametralen Richtungen angeordnet sind, zu dem Rotationskörper (2) annähernd konzentrisch bogenförmig oder an einer annähernd tangentialen Linie eines konzentrischen Kreises des Drehkörpers (2) tafelförmig sind.

4. Fahrstuhlhebevorrichtung nach Anspruch 3,
bei der die Platten der Kühlrippe (11) bogenförmige Platten aufweisen, die jeweils einem gleichen Mittelwinkel entsprechen, der in einem Drehpunkt des Drehkörpers (2) angeordnet ist.

5. Fahrstuhlhebevorrichtung nach Anspruch 1,
wobei der starre Rahmen (1) einen Raumabschnitt bildet, der in seiner zentralen Position zylindrisch und nach innen ausgenommen ist
wobei das Wärmerohr (9) in den Raumabschnitt hineinragt,
wobei die Wärmeabstrahlungsrippe (10) an dem vorstehenden Abschnitt vorgesehen ist,
wobei in dem starren Rahmen (1) ein Lüftungsloch (31) ausgebildet ist, das radial von dem Raumabschnitt zu einer Innenseite des starren Rahmens (1) in einer diametralen Richtung durchdrungen ist, und um die Wärmeabstrahlungsrippe (10) herum angeordnet ist; und
wobei die Kühlrippe (11) am Drehkörper (2) vorgesehen ist und an Verlängerungen von Lüftungslöchern in diametraler Richtung angeordnet ist.

## Revendications

1. Treuil d'ascenseur comprenant :
un cadre rigide (1) ;
un arbre (5) qui est fourni verticalement au niveau d'une position centrale du cadre rigide (1) ;
un corps rotatif (2) qui est supporté de manière rotative par un palier (6) sur l'arbre (5) ;
un stator (7) fourni sur le cadre rigide (1) ; et
un aimant inducteur (8), qui est fourni sur le corps rotatif (2), qui fait face au stator (7), et qui est configuré comme un moteur conjointement avec le stator (7) ;
**caractérisé en ce qu'**il comprend en outre :
un caloduc (9) qui est disposé dans l'arbre (5), dans lequel une partie du caloduc (9) fait saillie vers l'extérieur de l'arbre (5) ;
une ailette de rayonnement thermique (10) qui est fournie sur la partie saillante du caloduc (9) ; et
une ailette de refroidissement (11), qui est fournie sur le corps rotatif (2), et qui est agencée autour de l'ailette de rayonnement thermique (10).

2. Treuil d'ascenseur selon la revendication 1,
dans lequel l'ailette de refroidissement (11) est configurée sous la forme d'une pluralité de plaques planes (11a), et
dans lequel les plaques planes (11a), qui sont agencées à un intervalle dans une direction de rotation, sont agencées radialement dans une direction diamétrale à partir d'un centre de rotation du corps rotatif (2).

3. Treuil d'ascenseur selon la revendication 1,
dans lequel l'ailette de refroidissement (11) est configurée sous la forme d'une pluralité de plaques en forme d'arc ou tabulaires (20a), et
dans lequel les plaques, qui sont agencées à un intervalle dans des directions de rotation et diamétrales, présentent des formes en arc approximativement concentriques avec le corps rotatif (2) ou présentent des formes tabulaires sur une ligne approximativement tangente d'un cercle concentrique du corps rotatif (2).

4. Treuil d'ascenseur selon la revendication 3,
dans lequel les plaques de l'ailette de refroidissement (11) possèdent des plaques en forme d'arc dont chacune correspond à un même angle central disposé au niveau d'un centre de rotation du corps rotatif (2).

5. Treuil d'ascenseur selon la revendication 1,
dans lequel le cadre rigide (1) forme une partie d'espace qui est évidée de manière cylindrique et vers l'intérieur au niveau de sa position centrale
dans lequel le caloduc (9) fait saillie à l'intérieur de la partie d'espace,
dans lequel l'ailette de rayonnement thermique (10) est fournie sur la partie saillante,
dans lequel un trou de ventilation (31) est formé dans le cadre rigide (1), est pénétré radialement de la partie d'espace à un intérieur du cadre rigide (1) dans une direction diamétrale, et est agencé autour de l'ailette de rayonnement thermique (10) ; et
dans lequel l'ailette de refroidissement (11) est fournie sur le corps rotatif (2) et agencée sur des extensions de trous de ventilation dans la direction diamétrale.
